(19) **Europäisches Patentamt / European Patent Office / Office européen des brevets**

(11) **EP 4 318 441 B1**

(12) **EUROPEAN PATENT SPECIFICATION**

(45) Date of publication and mention
of the grant of the patent:
**17.12.2025 Bulletin 2025/51**

(21) Application number: **22775864.6**

(22) Date of filing: **25.03.2022**

(51) International Patent Classification (IPC):
*G09C 1/00* *(2006.01)*    *G06N 3/08* *(2023.01)*
*G06F 21/60* *(2013.01)*    *G06F 21/62* *(2013.01)*
*G06N 7/01* *(2023.01)*    *G06N 20/00* *(2019.01)*
*H04L 9/08* *(2006.01)*

(52) Cooperative Patent Classification (CPC):
**G06F 21/602; G06F 21/6245; G06N 3/08;
G06N 7/01; G06N 20/00; H04L 9/085**

(86) International application number:
**PCT/JP2022/014701**

(87) International publication number:
**WO 2022/203083 (29.09.2022 Gazette 2022/39)**

(54) **LEARNING PROGRAM, LEARNING METHOD, AND LEARNING DEVICE**

LERNPROGRAMM, LERNVERFAHREN UND LERNVORRICHTUNG

PROGRAMME D'APPRENTISSAGE, PROCÉDÉ D'APPRENTISSAGE, ET DISPOSITIF
D'APPRENTISSAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.03.2021 JP 2021053128**

(43) Date of publication of application:
**07.02.2024 Bulletin 2024/06**

(73) Proprietor: **NTT Docomo Business, Inc.
Tokyo 100-8019 (JP)**

(72) Inventors:
• **TANAKA, Satoshi**
  **Tokyo 100-8019 (JP)**
• **SAKURAI, Yoichi**
  **Tokyo 100-8019 (JP)**
• **SAWADA, Masashi**
  **Tokyo 100-8019 (JP)**

(74) Representative: **Hoffmann Eitle
Patent- und Rechtsanwälte PartmbB
Arabellastraße 30
81925 München (DE)**

(56) References cited:
**WO-A1-2020/071441**    **WO-A1-2021/029024**
**JP-A- 2017 207 839**    **US-B1- 10 600 006**

## Description

[Technical Field]

The present invention relates to a learning program, a learning method, and a learning device.

[Background Art]

Conventionally, a secure computation system that performs statistical processing on data in an encrypted state has been known. For example, a technique of acquiring parameters in logistic regression analysis by using data in an encrypted state has been known (for example, refer to Non-Patent Literature 1).
In the following explanation, a regression coefficient and the like of a logistic regression model itself are referred to as model parameter. Moreover, processing of obtaining a model parameter by using training data, that is, a parameter set in training process is referred to as tuning parameter or hyperparameter.
US 10,600,006 B1 discloses methods, systems, and apparatuses, including computer programs encoded on computer storage media, for training a multi-party secure logistic regression model (SLRM) by using secrete sharing (secret sharing) techniques. One of the methods includes dividing sample training data for a secure logistic regression model (SLRM) into a plurality of shares using secret sharing (SS), wherein each share is distributed to a secure computation node (SCN); iteratively updating parameters associated with the SLRM using each share of the sample training data, wherein the iterative updating continues until the occurrence of a predetermined condition; and after iteratively updating the parameters associated with the SLRM, outputting a training result configured for use by each SCN.

[Citation List]

[Patent Citation]

Patent Literature 1: Japanese Laid-open Patent Publication No. 2020-042128

[Non-Patent Citation]

Non-Patent Literature 1: "System and Principles of Secure Computation", https://www.rd.ntt/sc/project/data-security/NTT-himitsu-keisan.pdf, Last Accessed Date: March 5, 2021
Non-Patent Literature 2: Naoto Kiribuchi, Dai Ikarashi, Koki Hamada, and Ryo Kikuchi: "MEVAL3: A Library for Programmable Secure Computation", Symposium on Cryptography and Information Security (SCIS), 2018
Non-Patent Literature 3: Eizen Kimura, Koki Hamada, Ryo Kikuchi, Koji Chida, Kazuya Okamoto, Shirou Manabe, Tomohiro Kuroda, Yasushi Matsumura, Toshihiro Takeda, and Naoki Mihara: "Evaluation of Secure Computation in a Distributed Healthcare Setting", Medical Informatics Europe (MIE) 2016: 152-156
Non-Patent Literature 4: Koji Chida, Gembu Morohashi, Hitoshi Fuji, Fumihiko Magata, Akiko Fujimura, Koki Hamada, Dai Ikarashi, Ryuichi Yamamoto: "Implementation and evaluation of an efficient secure computation system using 'R' for healthcare statistics", J Am Med Inform Assoc. 21, pp. 326-331, 2014

[Summary of Invention]

[Technical Problem]

However, the related techniques have a problem that there is a case in which adjustment of analysis accuracy according to an analysis subject is difficult in training process of logistic regression analysis by secure computation.
For example, in training of machine learning model including logistic regression model, there is a case in which update of a model parameter is repeated until convergence conditions are met.
In that case, among tuning parameters that determine the convergence conditions, there is one that is set in advance by a developer of a program for training, and cannot be adjusted by a user (analyst). Settings of the tuning parameters significantly affect the analysis accuracy of a trained logistic regression model.
Particularly, there is a case in which an update amount of a model parameter at a time being lower than a reference value is adopted as a convergence condition. On the other hand, in the technique described in Patent Literature 1, the reference value for an update amount of a model parameter cannot be set arbitrarily by a user.

[Solution to Problem]

In order to solve the above-described problems and achieve the object, the present invention provides a learning program, in accordance with claim 1.

The present invention also provides a learning method, in accordance with claim 4.

The present invention also provides a learning device, in accordance with claim 5.

[Advantageous Effects of Invention]

According to the present invention, adjustment of analysis accuracy according to an analysis subject can be performed in training process of a logistic regression model by secure computation.

[Brief Description of Drawings]

FIG. 1 is a diagram illustrating a configuration example of an analysis system according to a first embodiment.
FIG. 2 is a diagram illustrating a configuration example of an analysis server according to the first embodiment.
FIG. 3 is a flowchart illustrating a flow of training process by the analysis system according to the first embodiment.
FIG. 4 is a flowchart illustrating a flow of analysis process by the analysis system according to the first embodiment.
FIG. 5 is a diagram illustrating an example of a computer that executes learning program.

[Embodiments for Carrying Out the Invention]

Hereinafter, embodiments of a learning program, a learning method, and a learning device according to the present application will be explained in detail with reference to the drawings.

First Embodiment

In a first embodiment, a learning program a learning method, and a learning device are implemented by a single function of an analysis system. The analysis system can perform training of a logistic regression model and analysis using a trained model by a technique of secure computation.

Configuration of Analysis System of First Embodiment

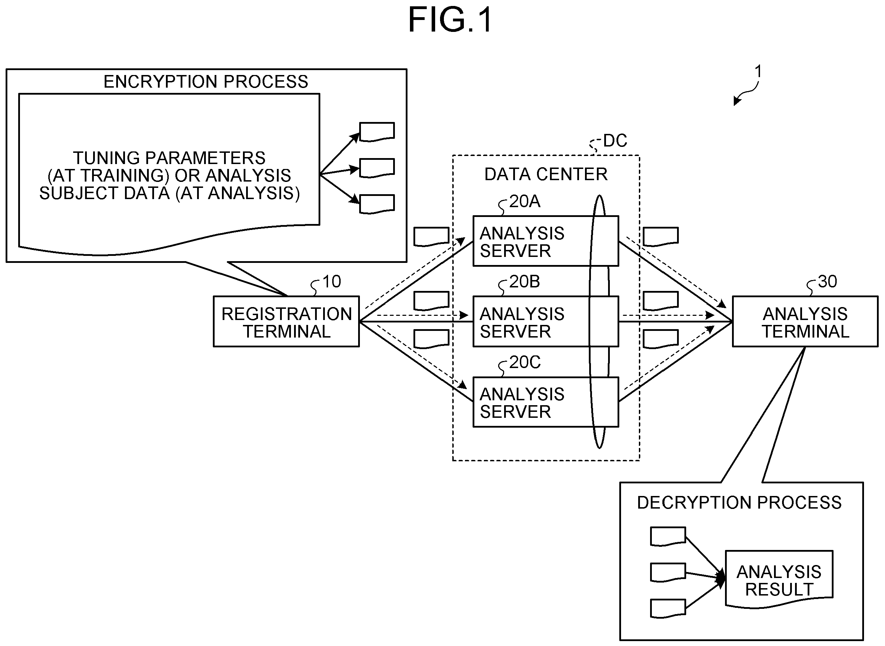

FIG. 1 is a diagram illustrating a configuration example of an analysis system according to the first embodiment. As illustrated in FIG. 1, an analysis system 1 includes a registration terminal 10, analysis server 20A, an analysis server 20B, an analysis server 20C, and an analysis terminal 30.

The respective analysis servers are equipped in a data center DC. Moreover, the number of analysis servers is not limited to the one illustrated in FIG. 1. Furthermore, in the following explanation, the analysis server 20A, the analysis server 20B, and the analysis server 20C may be referred to as analysis server group collectively.

The registration terminal 10 encrypts input data, and inputs it into the respective analysis servers. The input data is a tuning parameter to perform training of a logistic regression model, or analysis subject data.

For example, the registration terminal 10 performs encryption by fragmenting the input data into data called share, and by inputting the respective shares into different analysis servers, respectively, in a distributed manner (secret sharing). Each of the shares cannot be reconstructed individually.

Not limited to secret sharing, the registration terminal 10 can perform encryption by a method that can anonymize data, and that corresponds to a known secure computation technique.

The analysis server group perform secure computation by performing multiparty computation. For example, the analysis server group can perform training process of a logistic regression model by secure computation. Moreover, the analysis server group can perform calculation of an objective variable by secure computation, inputting analysis subject data into a trained logistic regression model as an explanatory variable.

The analysis terminal 30 decrypts an analysis result output from the respective analysis servers.

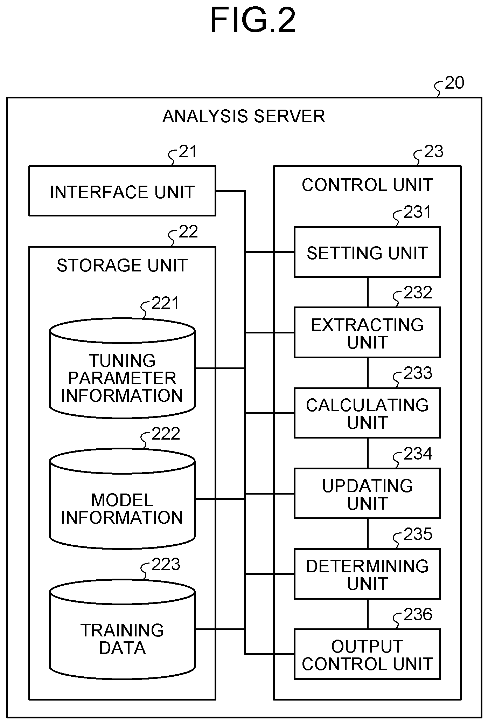

A configuration of an analysis server will be explained by using FIG. 2. FIG. 2 is a diagram illustrating a configuration example of an analysis server according to the first embodiment.

The respective analysis servers included in the analysis server group are not distinguished from one another, and denoted as analysis server 20. Moreover, the analysis server 20 functions as a learning device and an analysis device.

First, when the analysis server 20 functions as a learning device, the analysis server 20 accepts an input of tuning parameters of the analysis server 20. Moreover, the analysis server 20 can output an updated model parameter, and can transfer to other devices.

The tuning parameters include a learning rate, a maximum number of iterations, a batch size (batch or mini-batch), and a reference value of update amount. Details of the respective tuning parameters will be described later.

Next, when the analysis server 20 functions as an analysis device, the analysis server 20 accepts an input of analysis subject data. The analysis subject data includes an explanatory variable, an objective variable of which is unknown.

Respective components of the analysis server 20 will be explained. As illustrated in FIG. 1, the analysis server 20 includes an interface unit 21, a storage unit 22, and a control unit 23.

The interface unit 21 is an interface to input and output data. For example, the interface unit 21 is a network interface card (NIC). The interface unit 21 can communicate data with other devices.

Moreover, the interface unit 21 may be connected to an input device, such as a mouse and a keyboard. Furthermore, the interface unit 21 may be connected to an output device, such as a display and a speaker.

The storage unit 22 is a storage device, such as a hard disk drive (HDD), a solid state drive (SSD), an optical disk. The storage unit 22 may be a semiconductor memory that can rewrite data, such as a random access memory (RAM), a flash memory, a nonvolatile static random access memory (NVSRAM). The storage unit 22 stores an operating system (OS) and various kinds of programs executed by the analysis server 20.

The storage unit 22 stores tuning parameter information 221 and model information 222. The tuning parameter information 221 is a default value of a tuning parameter. Moreover, the model information 222 is a model parameter to develop a logistic regression model explained later. For example, the model information 222 is a regression coefficient of the logistic regression model.

Training data 223 is a combination of an explanatory variable and an objective variable of ground truth. The training data 223 is supposed to be encrypted for secure computation.

The control unit 23 controls the entire analysis server 20. The control unit 23 is, for example, an electronic circuit, such as a central processing unit (CPU), a micro processing unit (MPU), and a graphics processing unit (GPU), or an integrated circuit, such as an application specific integrated circuit (ASIC) and a field programmable gate array (FPGA). Moreover, the control unit 23 has an internal memory to store a program in which various kinds of processing procedures are defined and control data, and performs various processing by using the internal memory.

The control unit 23 functions as various kinds of processing units as various kinds of programs operate. For example, the control unit 23 functions as a setting unit 231, an extracting unit 232, a calculating unit 233, an updating unit 234, a determining unit 235, and an output control unit 236.

First, processing of the setting unit 231, the extracting unit 232, the calculating unit 233, the updating unit 234, and the determining unit 235 when the analysis server 20 functions as a learning device will be explained.

The setting unit 231, the extracting unit 232, the calculating unit 233, the updating unit 234, and the determining unit 235 may be configured to perform each processing by a single function. In this case, arguments of the function include the tuning parameter.

The setting unit 231 performs settings of the tuning parameters. For example, the setting unit 231 stores an input tuning parameter in a predetermined variable in a function.

The extracting unit 232 extracts a mini match from the training data. For example, the extracting unit 232 performs extraction when the batch size of the tuning parameter is "mini batch".

Calculation in the calculating unit 233, the updating unit 234, and the determining unit 235 is performed by secure computation.

the calculating unit 233 inputs the explanatory variable into the logistic regression model, and calculates the objective variable by secure computation. The calculating unit 233 calculates the objective variable by a function including a reference value specified by a user and encrypted, as an argument.

The calculating unit 233 calculates the objective variable by Equation 1.

$$f(\vec{x}) = \sigma(\vec{w} \cdot (1, \vec{x})) \qquad \cdots (1)$$

The left side of Equation 1 corresponds to the objective variable obtained by calculation. Moreover, $\sigma$ is a sigmoid function. Furthermore, $\rightarrow w$ ($\rightarrow$ right above w) is a regression coefficient of the logistic regression model. Moreover, $\rightarrow w$ can be regarded as a model parameter, and corresponds to the model information 222. $\rightarrow x$ is the explanatory variable.

The expression within the parentheses on the right side of Equation 1 can be expanded as Equation 2. Moreover, $\rightarrow w$ is expressed as Equation 3. Furthermore, $\rightarrow x$ is expressed as Equation 4.

$$\vec{w} \cdot (1, \vec{x}) = w_0 + w_1 x_1 + w_2 x_2 + \cdots + w_n x_n \qquad \cdots (2)$$

$$\vec{x} = x_1, x_2, \ldots, x_n \qquad \cdots (3)$$

$$\vec{w} = w_0, w_1, \ldots, w_n \qquad \cdots (4)$$

Moreover, the training data 223 is expressed as Equation 5. $y_i$ is a ground truth of the objective variable. m is the number of individual data included in the training data 223, and i is a number to identify individual data included in the training data 223.

$$\{\vec{x}_i, y_i\}_m (0 \leq i \leq m) \qquad \cdots (5)$$

Moreover, an initial value of the model parameter of the logistic regression model is expressed as Equation 6.

$$\vec{w}_{t=0} \qquad \cdots (6)$$

$\eta$ in Equation 7 is the learning rate included in the tuning parameter.

$$\eta(0 < \eta < 1) \qquad \cdots (7)$$

T in Equation 8 is a maximum number of iteration included in the tuning parameter.

$$T(0 < t < T) \qquad \cdots (8)$$

The updating unit 234 updates the model parameters of the logistic regression model by secure computation based on the calculation result by the calculating unit 233. The updating unit 234 updates the model parameters by a function.

The updating unit 234 updates the model parameter as in Equation 9 at the t+1-th (range of t is as defined in Equation 8) update.

$$w_{j,t+1} = w_{j,t} - \eta \frac{1}{m} \sum_{i=0}^{m} (f(\vec{x}_i)_t - y_i) x_{i,j} \quad (0 \leq j < n) \qquad \cdots (9)$$

The determining unit 235 determines whether to end the update of the model parameters based on whether the update amount of the model parameter by the updating unit 234 is smaller than the reference value specified by user. The determining unit 235 determines, by secure computation, whether to end the update of the model parameter by a function.

For example, when $|w_{j,t+1}-w_{j,t}|$ (where $||$ is an absolute value) exceeds the reference value specified by the user, the determining unit 235 determines not to end the update of the model parameter.

On the other hand, when $|w_{j,t+1}-w_{j,t}|$ does not exceed the reference value specified by the user, the determining unit 235 determines to end the update of the model parameters.

Moreover, when the determining unit 235 determines not to end the update of the model parameter, the calculating unit 233 performs more calculations. That is, when the convergence condition is not satisfied after the t-th update of the model parameter, the analysis server 20 performs the t+1-th update of the model parameter.

Next, processing of the processing unit 233 and the output control unit 236 when the analysis server 20 functions as an analysis device will be explained.

The calculating unit 233 inputs the explanatory variable into the logistic regression model developed based on the model information 222, and calculates the objective variable by secure computation.

The output control unit 236 outputs an analysis result based on the objective variable calculated by the calculating unit 233. For example, the output control unit 236 may output the objective variable as it is, or may output classification based on the objective variable or a result of determination.

Processing of Analysis System of First Embodiment

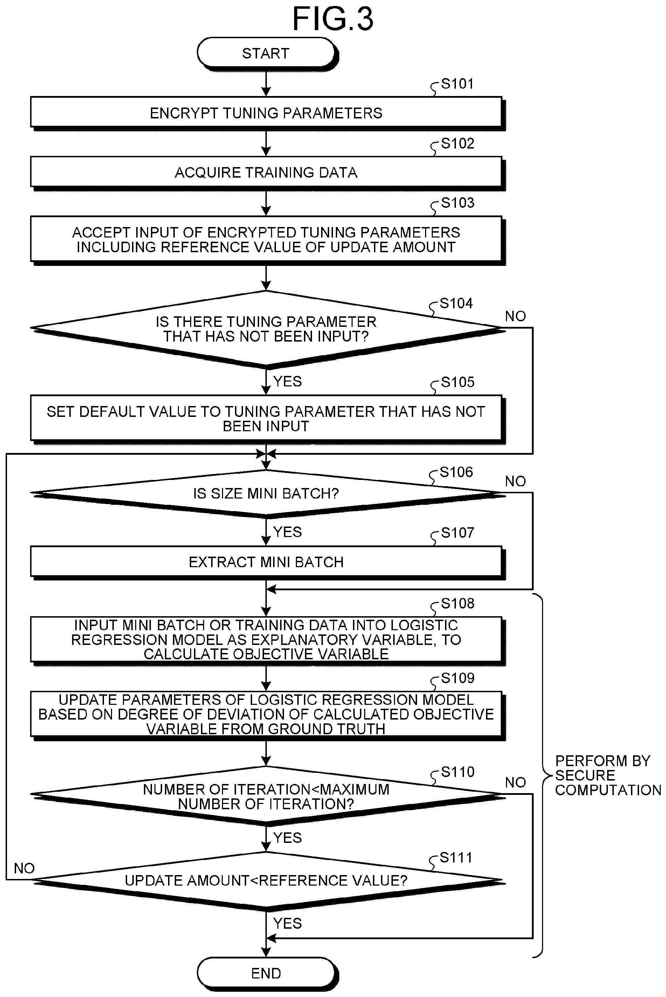

FIG. 3 is a flowchart illustrating a flow of training process by the analysis system according to the first embodiment. First, the registration terminal 10 encrypts the tuning parameters (step S101).

The analysis server 20 acquires the training data 223 from the storage unit 22 (step S102). At the same time, the analysis server 20 accepts an input of the encrypted tuning parameters including a reference value of an update amount (step S103).

The training data may be input as an argument of a function. Moreover, the training data and the tuning parameter may be acquired from a setting file that can be edited by the user, or the like.

There is a case in which all of or some of the tuning parameters are not input. Therefore, when there is a tuning parameter that has not been input (step S104: YES), the analysis server 20 sets a default value to the tuning parameter that has not been input (step S105). The analysis server 20 can acquire the default value of the tuning parameter from the tuning information 221.

On the other hand, when there is no tuning parameter that has not been input (step S104) NO), the analysis server 20 proceeds to step S106.

When the batch size specified as the tuning parameter is "mini batch" (step S106: YES), the analysis server 20 extracts a mini batch from the training data (step S107).

On the other hand, when the batch size specified as the tuning parameter is not "mini batch" (step S106: NO), the analysis server 20 proceeds to step S108.

The analysis server 20 performs the processing from step S108 to step S111 by secure computation.

The analysis server 20 calculates the objective variable by inputting the mini batch or the input training data into the logistic regression model as the explanatory variable (step S108).

The analysis server 20 can develop the logistic regression model based on the model parameters acquired from the model information 222.

The analysis server 20 updates the model parameters of the logistic regression model based on a degree of deviation of the calculated objective variable from a ground truth (step S109).

When the number of iteration from step S106 to step S109 is not smaller than the maximum number of iteration of the tuning parameters (step S110: NO), the analysis server 20 ends the processing.

On the other hand, when the number of iteration is smaller than the maximum number of iteration (step S110: YES), the analysis server 20 proceeds to step S111.

Furthermore, the update amount at step S109 is less than the reference value of the tuning parameter (step S111: YES), the analysis server 20 ends the processing.

On the other hand, when the update amount at step S109 is not less than the reference value (step S111: NO), the analysis server 20 returns to step S106 and repeats the processing.

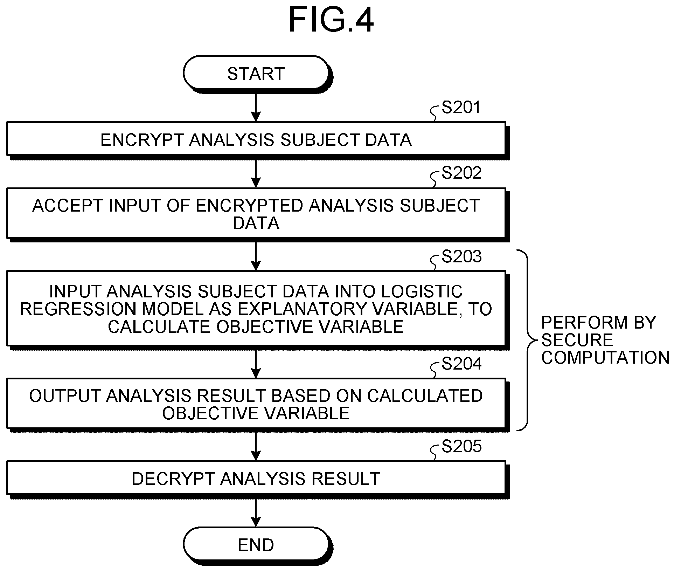

FIG. 4 is a flowchart illustrating a flow of analysis processing by the analysis system according to the first embodiment. As illustrated in FIG. 4, first, the registration terminal 10 encrypts the analysis subject data (step S201).

The analysis server 20 then accepts an input of the encrypted analysis subject data (step S202).

The analysis server 20 performs the processing at steps S203 and S204 by secure computation.

The analysis server 20 inputs the analysis subject data into the logistic regression model as the explanatory variable, to calculate the objective variable (step S203). The analysis server 20 outputs a result of analysis based on the calculated objective variable (step S204).

Furthermore, the analysis terminal 30 decrypts the result of analysis (step S205).

Effects of First Embodiment

As explained above, the calculating unit 233 inputs an explanatory variable into the logistic regression model to calculate an objective variable by secure computation. The updating unit 234 updates model parameters of the logistic regression model based on a result of calculation by the calculating unit 233. The determining unit 235 determines whether to end update of the model parameters by secure computation based on whether an update amount of the model parameters by the updating unit 234 is smaller than a reference value that has been specified by a user and is encrypted.

As described, the analysis server 20 performs convergence determination based on the reference value of the update amount specified by a user. As a result, according to the present embodiment, adjustment of analysis accuracy according to an analysis subject is enabled in training process of a logistic regression model.

As described, in the present embodiment, any of calculation of an objective value, update of parameters, and determination whether to update can be performed by secure computation. Because results of the calculation, update, and determination remain encrypted and are not to be decrypted in the analysis server 20, it is possible to conceal the process and results of the processing.

In the present embodiment, as for a technique of secure computation, a method similar to the method described in Patent Literature 1 can be used.

Furthermore, tuning parameters including a reference value (maximum number of iteration) are also encrypted and, therefore, can be concealed.

The calculating unit 233 calculates an objective variable by a function including a reference value specified by a user as an argument. The updating unit 234 updates the model parameters by the function. The determining unit 235 determines whether to end the update of the model parameters by secure computation.

As described, by using the reference value of the update amount as an argument of the function, it is possible to accept specification by a user easily.

When the determining unit 235 determines that the update of the model parameter is not to be ended, the calculating unit 233 performs more calculations. Thus, the analysis accuracy of a model can be adjusted to an accuracy intended by the user.

System Configuration Etc.

Moreover, the respective components of the respective devices illustrated are of functional concept, and it is not necessarily required to be configured physically as illustrated. That is, specific forms of distribution and integration of the respective devices are not limited to the ones illustrated, and all or some thereof can be configured to be distributed or integrated functionally or physically in arbitrary units according to various kinds of loads, usage conditions, and the like. Furthermore, as for the respective processing functions performed by the respective devices, all or an arbitrary part thereof can be implemented by a CPU and a computer program that is analyzed and executed by the CPU, or can be implemented as hardware by wired logic. The program may be executed by other processors such as a GPU, not limited to CPU.

Moreover, out of the respective processing explained in the above embodiments, all or some of processing explained to be performed automatically can also be performed manually, or all or some of processing explained to be performed manually can also be performed automatically by a publicly-known method. Besides, the procedure of processing, the procedure of control, the specific names, and the information including various kinds of data and parameters described in the above document or in the drawings can be arbitrarily changed, unless otherwise specified.

Program

As one embodiment, the analysis server 20 can be implemented by installing a learning program that performs training process described above as package software of online software into a desired computer. For example, by causing an information processing device to execute the learning program described above, it is possible to make the information processing device function as the analysis server 20. The information processing device herein includes a desktop or laptop personal computer. Moreover, other than that, the information processing device includes a mobile communication terminal, such as a smartphone, mobile phone, and a personal handyphone system (PHS) and, furthermore, a slate device such as a personal digital assistant (PDA), and the like, falling within the category.

Moreover, the analysis server 20 can be implemented as a training server device that provide a service relating to the training process described above to a client, regarding a terminal device used by a user as the client. For example, the training server device is implemented as a server device providing a training service in which encrypted training data and tuning parameters are input, and trained model parameters are output.

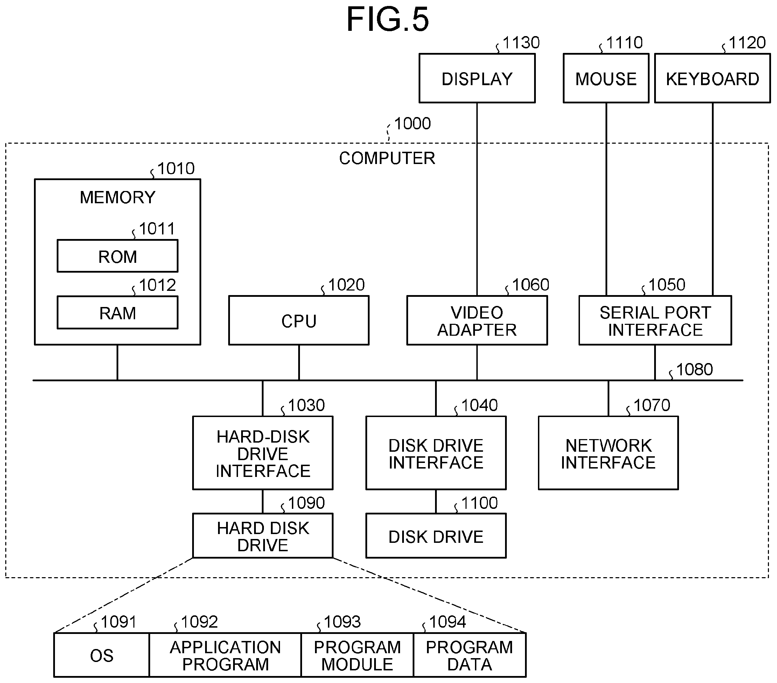

FIG. 5 is a diagram illustrating an example of a computer that executes the learning program. A computer 1000 includes, for example, a memory 1010 and a CPU 1020. Moreover, the computer 1000 includes a hard-disk drive interface 1030, a disk drive interface 1040, a serial port interface 1050, a video adapter 1060, and a network interface 1070. These respective components are connected through a bus 1080.

The memory 1010 includes a read only memory (ROM) 1011 and a random access memory (RAM) 1012. The ROM 1011 stores, for example, a boot program such as a basic input output system (BIOS). The hard-disk drive interface 1030 is connected to a hard disk drive 1090. The disk drive interface 1040 is connected to a disk drive 1100. For example, a detachable recording medium, such as a magnetic disk and an optical disk, is inserted into the disk drive 1100. A serial port interface 1050 is connected to, for example, a mouse 1110 and a keyboard 1120. A video adapter 1060 is connected to, for example, a display 1130.

The hard disk drive 1090 stores, for example, an OS 1091, an application program 1092, a program module 1093, and program data 1094. That is, a program that defines respective processing of the analysis server 20 is implemented as the program module 1093 in which computer-executable codes are described. The program module 1093 is stored in, for example, the hard disk drive 1090. For example, the program module 1093 to perform processing similar to functional configuration in the analysis server 20 is stored in the hard disk drive 1090. The hard disk drive 1090 may be substituted by an SSD.

Furthermore, setting data used in the processing in the embodiment described above is stored in, for example, the memory 1010 or the hard disk drive 1090 as the program data 1094. The CPU 1020 loads the program module 1093 or the program data 1094 stored in the memory 1010 or the hard disk drive 1090 onto the RAM 1012 as necessary, and performs the processing of the embodiment described above.

The program module 1093 and the program data 1094 are not limited to be stored in the hard disk drive 1090, but may be stored in, for example, a detachable recording medium, and may be read by the CPU 1020 through the disk drive

# EP 4 318 441 B1

1100 or the like. Alternatively, the program module 1093 and the program data 1094 may be stored in another computer that is connected through a network (local area network (LAN), wide area network (WAN), or the like). The program module 1093 and the program data 1094 may be read from the other computer by the CPU 1020 through the network interface 1070.

[Explanation of Reference]

| 10 | REGISTRATION TERMINAL |
|---|---|
| 20, 20A, 20B, 20C | ANALYSIS SERVER |
| 21 | INTERFACE UNIT |
| 22 | STORAGE UNIT |
| 23 | CONTROL UNIT |
| 30 | ANALYSIS TERMINAL |
| 221 | TUNING PARAMETER INFORMATION |
| 222 | MODEL INFORMATION |
| 223 | TRAINING DATA |
| 231 | SETTING UNIT |
| 232 | EXTRACTING UNIT |
| 233 | CALCULATING UNIT |
| 234 | UPDATING UNIT |
| 235 | DETERMINING UNIT |
| 236 | OUTPUT CONTROL UNIT |

## Claims

1. A learning program which, when the program is executed by a computer, causes a computer (1000) to execute a process comprising:

    an accepting step of accepting an input of tuning parameters comprising a maximum number of iterations and a reference value that has been specified by a user, the tuning parameters being encrypted;
    a calculating step of calculating, by secure computation, an objective variable by inputting an explanatory variable into a logistic regression model;
    an updating step of updating parameters of the logistic regression model by secure computation based on a result of calculation by the calculating step; and
    a determining step of determining, by secure computation, whether to end update of the parameters based on whether an update amount of the parameters by the updating step is smaller than the reference value and based on whether the number of iterations is smaller than the maximum number of iterations.

2. The learning program according to claim 1, wherein

    the calculating step includes calculating the objective variable by a function including a reference value that has been specified by a user and is encrypted as an argument,

8

the updating step includes updating the parameters by the function, and
the determining step includes determining whether to end the update of the parameters by the function.

3. The learning program according to claim 1 or 2, wherein the calculating step is further performed when it is determined not to end the update of the parameters by the determining step.

4. A computer-implemented learning method that is performed by a learning device (20), the learning method comprising:

an accepting process of accepting an input of tuning parameters comprising a maximum number of iterations and a reference value that has been specified by a user, the tuning parameters being encrypted;
a calculating process of calculating, by secure computation, an objective variable by inputting an explanatory variable into a logistic regression model;
an updating process of updating parameters of the logistic regression model based on a result of calculation by the calculating process; and
a determining process of determining, by secure computation, whether to end update of the parameters based on whether an update amount of the parameters by the updating process is smaller than the reference value and based on whether the number of iterations is smaller than the maximum number of iterations.

5. A learning device (20), wherein the learning device (20) is configured to accepting an input of tuning parameters comprising a maximum number of iterations and a reference value that has been specified by a user, the tuning parameters being encrypted, the learning device (20) comprising:

a setting unit (231) configured to perform setting of the tuning parameters;
a calculating unit (233) configured to calculate, by secure computation, an objective variable by inputting an explanatory variable into a logistic regression model;
an updating unit (234) configured to update parameters of the logistic regression model by secure computation, based on a result of calculation by the calculating unit; and
a determining unit (235) configured to determine whether to end update of the parameters by secure computation, based on whether an update amount of the parameters by the updating unit is smaller than the reference value and based on whether the number of iterations is smaller than the maximum number of iterations.

**Patentansprüche**

1. Lernprogramm, das, wenn das Programm von einem Computer ausgeführt wird, einen Computer (1000) veranlasst, einen Prozess auszuführen, umfassend:

einen Annahmeschritt eines Annehmens einer Eingabe von Tuningparametern, umfassend eine maximale Anzahl von Iterationen und einen von einem Benutzer spezifizierten Referenzwert, wobei die Tuningparameter verschlüsselt sind;
einen Berechnungsschritt eines Berechnens, mittels sicherer Berechnung, einer Zielvariable durch Eingeben einer erklärenden Variable in ein logistisches Regressionsmodell;
einen Aktualisierungsschritt eines Aktualisierens von Parametern des logistischen Regressionsmodells mittels sicherer Berechnung, basierend auf einem Berechnungsergebnis durch den Berechnungsschritt; und
einen Bestimmungsschritt eines Bestimmens, mittels sicherer Berechnung, ob die Aktualisierung der Parameter zu beenden ist, basierend darauf, ob eine Aktualisierungsmenge der Parameter durch den Aktualisierungsschritt kleiner als der Referenzwert ist, und basierend darauf, ob die Anzahl von Iterationen kleiner als die maximale Anzahl von Iterationen ist.

2. Lernprogramm nach Anspruch 1, wobei

der Berechnungsschritt das Berechnen der Zielvariable durch eine Funktion, einschließend eines von einem Benutzer spezifizierten und als Argument verschlüsselten Referenzwerts, einschließt,
der Aktualisierungsschritt das Aktualisieren der Parameter durch die Funktion einschließt, und
der Bestimmungsschritt das Bestimmen, ob die Aktualisierung der Parameter durch die Funktion zu beenden ist, einschließt.

3. Lernprogramm nach Anspruch 1 oder 2, wobei der Berechnungsschritt weiter durchgeführt wird, wenn bestimmt wird, die Aktualisierung der Parameter durch den Bestimmungsschritt nicht zu beenden.

4. Computerimplementiertes Lernverfahren, das von einer Lernvorrichtung (20) durchgeführt wird, das Lernverfahren umfassend:

einen Annahmeprozess eines Annehmens einer Eingabe von Tuningparametern, umfassend eine maximale Anzahl von Iterationen und einen von einem Benutzer spezifizierten Referenzwert, wobei die Tuningparameter verschlüsselt sind;
einen Berechnungsprozess eines Berechnens, mittels sicherer Berechnung, einer Zielvariable durch Eingeben einer erklärenden Variable in ein logistisches Regressionsmodell;
einen Aktualisierungsprozess eines Aktualisierens von Parametern des logistischen Regressionsmodells, basierend auf einem Berechnungsergebnis durch den Berechnungsprozess; und
einen Bestimmungsprozess eines Bestimmens, mittels sicherer Berechnung, ob die Aktualisierung der Parameter zu beenden ist, basierend darauf, ob eine Aktualisierungsmenge der Parameter durch den Aktualisierungsprozess kleiner als der Referenzwert ist, und basierend darauf, ob die Anzahl von Iterationen kleiner als die maximale Anzahl von Iterationen ist.

5. Lernvorrichtung (20), wobei die Lernvorrichtung (20) konfiguriert ist, eine Eingabe von Tuningparametern anzunehmen, umfassend eine maximale Anzahl von Iterationen und einen von einem Benutzer spezifizierten Referenzwert, wobei die Tuningparameter verschlüsselt sind, die Lernvorrichtung (20) umfassend:

eine Einstellungseinheit (231), die konfiguriert ist, eine Einstellung der Tuningparameter durchzuführen;
eine Berechnungseinheit (233), die konfiguriert ist, mittels sicherer Berechnung eine Zielvariable zu berechnen, indem eine erklärende Variable in ein logistisches Regressionsmodell eingegeben wird;
eine Aktualisierungseinheit (234), die konfiguriert ist, Parameter des logistischen Regressionsmodells mittels sicherer Berechnung zu aktualisieren, basierend auf einem Berechnungsergebnis durch die Berechnungseinheit; und
eine Bestimmungseinheit (235), die konfiguriert ist, zu bestimmen, ob die Aktualisierung der Parameter mittels sicherer Berechnung zu beenden ist, basierend darauf, ob eine Aktualisierungsmenge der Parameter durch die Aktualisierungseinheit kleiner als der Referenzwert ist, und basierend darauf, ob die Anzahl von Iterationen kleiner als die maximale Anzahl von Iterationen ist.

**Revendications**

1. Programme d'apprentissage qui, lorsque le programme est exécuté par un calculateur, amène un calculateur (1000) à exécuter un processus comprenant :

une étape d'acceptation consistant à accepter une entrée de paramètres de réglage comprenant un nombre maximal d'itérations et une valeur de référence spécifiée par un utilisateur, les paramètres de réglage étant chiffrés ;
une étape de calcul consistant à calculer, par calcul sécurisé, une variable objective en entrant une variable explicative dans un modèle de régression logistique ;
une étape de mise à jour consistant à mettre à jour des paramètres du modèle de régression logistique par calcul sécurisé sur la base du résultat d'un calcul exécuté lors de l'étape de calcul ; et
une étape de détermination consistant à déterminer, par calcul sécurisé, s'il convient de mettre fin à la mise à jour des paramètres, en fonction du fait que la quantité de mise à jour des paramètres par l'étape de mise à jour est inférieure à la valeur de référence et en fonction du fait que le nombre d'itérations est inférieur au nombre maximal d'itérations.

2. Programme d'apprentissage selon la revendication 1, dans lequel

l'étape de calcul inclut le calcul de la variable objective par une fonction incluant une valeur de référence qui a été spécifiée par un utilisateur et est chiffrée en tant qu'argument,
l'étape de mise à jour inclut la mise à jour des paramètres par la fonction, et
l'étape de détermination inclut la détermination de la nécessité de mettre fin à la mise à jour des paramètres par la fonction.

3. Programme d'apprentissage selon la revendication 1 ou la revendication 2, dans lequel l'étape de calcul est en outre exécutée lorsqu'il est déterminé de ne pas mettre fin à la mise à jour des paramètres par l'étape de détermination.

4. Procédé d'apprentissage mis en œuvre par calculateur qui est exécuté par un dispositif (20) d'apprentissage, le procédé d'apprentissage comprenant :

   un processus d'acceptation consistant à accepter une entrée de paramètres de réglage comprenant un nombre maximal d'itérations et une valeur de référence spécifiée par un utilisateur, les paramètres de réglage étant chiffrés ;
   un processus de calcul consistant à calculer, par calcul sécurisé, une variable objective en entrant une variable explicative dans un modèle de régression logistique ;
   un processus de mise à jour consistant à mettre à jour des paramètres du modèle de régression logistique en fonction d'un résultat de calcul obtenu par le processus de calcul ; et
   un processus de détermination consistant à déterminer, par calcul sécurisé, s'il convient de mettre fin à la mise à jour des paramètres en fonction du fait que la quantité de mise à jour des paramètres par le processus de mise à jour est inférieure à la valeur de référence et en fonction du fait que le nombre d'itérations est inférieur au nombre maximal d'itérations.

5. Dispositif (20) d'apprentissage, dans lequel le dispositif (20) d'apprentissage est configuré pour accepter une entrée des paramètres de réglage comprenant un nombre maximum d'itérations et une valeur de référence spécifiée par un utilisateur, les paramètres de réglage étant chiffrés, le dispositif (20) d'apprentissage comprenant :

   une unité (231) de réglage configurée pour exécuter le réglage des paramètres de réglage ;
   une unité (233) de calcul configurée pour calculer, par calcul sécurisé, une variable objective en entrant une variable explicative dans un modèle de régression logistique ;
   une unité (234) de mise à jour configurée pour mettre à jour des paramètres du modèle de régression logistique par calcul sécurisé, en fonction d'un résultat de calcul par l'unité de calcul ; et
   une unité (235) de détermination configurée pour déterminer s'il convient de mettre fin à la mise à jour des paramètres par calcul sécurisé, en fonction du fait que la quantité de mise à jour des paramètres par l'unité de mise à jour est inférieure à la valeur de référence et en fonction du fait que le nombre d'itérations est inférieur au nombre maximal d'itérations.

FIG.1

# FIG.2

ANALYSIS SERVER — 20

INTERFACE UNIT — 21

CONTROL UNIT — 23

STORAGE UNIT — 22

TUNING PARAMETER INFORMATION — 221

MODEL INFORMATION — 222

TRAINING DATA — 223

SETTING UNIT — 231

EXTRACTING UNIT — 232

CALCULATING UNIT — 233

UPDATING UNIT — 234

DETERMINING UNIT — 235

OUTPUT CONTROL UNIT — 236

# FIG.3

```
START
```

**S101**

ENCRYPT TUNING PARAMETERS

**S102**

ACQUIRE TRAINING DATA

**S103**

ACCEPT INPUT OF ENCRYPTED TUNING PARAMETERS INCLUDING REFERENCE VALUE OF UPDATE AMOUNT

**S104**

IS THERE TUNING PARAMETER THAT HAS NOT BEEN INPUT? — NO

YES **S105**

SET DEFAULT VALUE TO TUNING PARAMETER THAT HAS NOT BEEN INPUT

**S106**

IS SIZE MINI BATCH? — NO

YES **S107**

EXTRACT MINI BATCH

**S108**

INPUT MINI BATCH OR TRAINING DATA INTO LOGISTIC REGRESSION MODEL AS EXPLANATORY VARIABLE, TO CALCULATE OBJECTIVE VARIABLE

**S109**

UPDATE PARAMETERS OF LOGISTIC REGRESSION MODEL BASED ON DEGREE OF DEVIATION OF CALCULATED OBJECTIVE VARIABLE FROM GROUND TRUTH

**S110**

NUMBER OF ITERATION<MAXIMUM NUMBER OF ITERATION? — NO

YES

**S111**

UPDATE AMOUNT<REFERENCE VALUE? — NO

YES

PERFORM BY SECURE COMPUTATION

```
END
```

# FIG.4

START

S201

ENCRYPT ANALYSIS SUBJECT DATA

S202

ACCEPT INPUT OF ENCRYPTED ANALYSIS SUBJECT DATA

S203

INPUT ANALYSIS SUBJECT DATA INTO LOGISTIC REGRESSION MODEL AS EXPLANATORY VARIABLE, TO CALCULATE OBJECTIVE VARIABLE

PERFORM BY SECURE COMPUTATION

S204

OUTPUT ANALYSIS RESULT BASED ON CALCULATED OBJECTIVE VARIABLE

S205

DECRYPT ANALYSIS RESULT

END

# FIG.5

DISPLAY 1130
MOUSE 1110
KEYBOARD 1120

COMPUTER 1000

MEMORY 1010
ROM 1011
RAM 1012

CPU 1020

VIDEO ADAPTER 1060

SERIAL PORT INTERFACE 1050

1080

HARD-DISK DRIVE INTERFACE 1030

DISK DRIVE INTERFACE 1040

NETWORK INTERFACE 1070

HARD DISK DRIVE 1090

DISK DRIVE 1100

OS 1091
APPLICATION PROGRAM 1092
PROGRAM MODULE 1093
PROGRAM DATA 1094

EP 4 318 441 B1

## REFERENCES CITED IN THE DESCRIPTION

**Patent documents cited in the description**

- US 10600006 B1

- JP 2020042128 A

**Non-patent literature cited in the description**

- *System and Principles of Secure Computation*, 05 March 2021, https://www.rd.ntt/sc/project/data-security/NTT-himitsu-keisan.pdf
- **NAOTO KIRIBUCHI** ; **DAI IKARASHI** ; **KOKI HAMADA** ; **RYO KIKUCHI**. MEVAL3: A Library for Programmable Secure Computation. *Symposium on Cryptography and Information Security (SCIS)*, 2018

- **EIZEN KIMURA** ; **KOKI HAMADA** ; **RYO KIKUCHI** ; **KOJI CHIDA** ; **KAZUYA OKAMOTO** ; **SHIROU MANABE** ; **TOMOHIRO KURODA** ; **YASUSHI MATSUMURA** ; **TOSHIHIRO TAKEDA** ; **NAOKI MIHARA**. Evaluation of Secure Computation in a Distributed Healthcare Setting. *Medical Informatics Europe (MIE)*, 2016, 152-156
- **KOJI CHIDA** ; **GEMBU MOROHASHI** ; **HITOSHI FUJI** ; **FUMIHIKO MAGATA** ; **AKIKO FUJIMURA** ; **KOKI HAMADA** ; **DAI IKARASHI** ; **RYUICHI YAMAMOTO**. Implementation and evaluation of an efficient secure computation system using 'R' for healthcare statistics. *J Am Med Inform Assoc.*, 2014, vol. 21, 326-331